(19) Europäisches Patentamt
European Patent Office
Office européen des brevets

(11) **EP 2 183 134 B1**

(12) **FASCICULE DE BREVET EUROPEEN**

(45) Date de publication et mention de la délivrance du brevet:
**10.08.2016  Bulletin 2016/32**

(21) Numéro de dépôt: **08829023.4**

(22) Date de dépôt: **18.08.2008**

(51) Int Cl.:
**B60T 7/10** *(2006.01)*          **B60T 7/12** *(2006.01)*

(86) Numéro de dépôt international:
**PCT/FR2008/051504**

(87) Numéro de publication internationale:
**WO 2009/030855 (12.03.2009 Gazette 2009/11)**

(54) **SYSTEME DE COMMANDE DU DESSERRAGE D'UN DISPOSITIF DE FREIN DE PARKING AUTOMATIQUE, EMBARQUE A BORD D'UN VEHICULE AUTOMOBILE**

SYSTEM ZUR STEUERUNG DES LÖSENS EINER IM FAHRZEUG BEFINDLICHEN AUTOMATISCHEN FESTSTELLBREMSENVORRICHTUNG

SYSTEM FOR CONTROLLING THE RELEASE OF AN AUTOMATIC PARKING BRAKE DEVICE ONBOARD AN AUTOMOBILE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.08.2007  FR 0757288**

(43) Date de publication de la demande:
**12.05.2010  Bulletin 2010/19**

(73) Titulaire: **Renault S.A.S.**
**92100 Boulogne-Billancourt (FR)**

(72) Inventeurs:
• **DESFRICHES, Christophe**
  **F-27210 Pacy-sur-Eure (FR)**
• **FEBRER, Pascal**
  **F-75014 Paris (FR)**
• **MONTI, Alessandro**
  **F-92250 La Garenne-Colombes (FR)**

(74) Mandataire: **Alizon, Robert**
**Renault s.a.s.**
**TCR GRA 2 36**
**1, avenue du Golf**
**F-78288 Guyancourt Cedex (FR)**

(56) Documents cités:
**EP-A- 1 327 566     DE-A1-102005 014 242**
**FR-A- 2 828 450**

EP 2 183 134 B1

**Description**

La présente invention porte sur un système et un procédé de commande du desserrage d'un dispositif de frein de parking automatique, embarqué à bord d'un véhicule automobile.

La demande de brevet français n° 2 828 450 (RENAULT) divulgue un système de commande du desserrage d'un dispositif de frein de parking automatique, embarqué à bord d'un véhicule automobile, dans lequel, si des conditions représentatives d'un démarrage ou d'une manoeuvre en côte sont réalisées, une commande de desserrage du frein de parking est émise une pluralité de fois, à destination d'actionneurs des freins, nécessitant une émission multiple d'une commande de desserrage du frein de parking.

Les demandes de brevets anglais GB 2 376 990 et GB 2 342 967 portent sur la génération d'une commande de desserrage d'un frein de parking respectivement en fonction de la position de la pédale d'embrayage et en fonction du couple mesuré aux roues. Ces documents émettent également une pluralité de fois une commande de desserrage du frein de parking.

Ces systèmes ne sont pas adaptés pour fonctionner avec des actionneurs de frein nécessitant l'envoi d'une seule commande de desserrage des freins, notamment parce que un envoi multiple d'une commande de desserrage peut entraîner un écartement trop important entre le piston d'un frein et le disque de freinage, laissant la possibilité, à des corps étrangers tels des poussières, de s'y infiltrer, pouvant causer une dégradation accélérée du frein. En outre, lors du serrage suivant le temps de serrage d'un frein est augmenté, car il faut d'abord que le piston revienne au contact du disque, d'où des problèmes de bruit et de lenteur du serrage.

En outre, de tels systèmes de commande de desserrage d'un dispositif de frein de parking automatique ne permettent pas au conducteur de desserrer le dispositif de frein de parking selon sa volonté, par exemple pour retarder volontairement le desserrage automatique lors d'un démarrage en côte ou d'une manoeuvre en côte.

Selon un aspect de l'invention, il est proposé un système de commande du desserrage d'un dispositif de frein de parking automatique, embarqué à bord d'un véhicule automobile. Le système comprend des moyens d'émission pour émettre plusieurs fois une commande de desserrage du dispositif de frein de parking, et des moyens d'interface, disposés entre lesdits moyens d'émission et ledit dispositif de frein de parking, pour recevoir lesdites émissions de la commande de desserrage et transmettre une commande de desserrage dudit dispositif de frein de parking.

Ainsi, les moyens d'émission adaptés pour des actionneurs de frein nécessitant une émission multiple d'une commande de desserrage sont facilement adaptables, à coût réduit, à des actionneurs de frein pour lesquels l'envoi multiple d'une commande de desserrage est inutile.

Selon l'invention lesdits moyens d'émission sont adaptés pour émettre un nombre prédéterminé de fois ladite commande de desserrage. Deux émissions successives sont séparées par un intervalle de temps prédéterminé.

Dans un mode de réalisation, le système comprend des moyens de commande manuels, actionnables par le conducteur, pour commander un desserrage du dispositif de frein de parking. Lesdits moyens d'interface sont adaptés pour émettre une commande de desserrage du dispositif de frein de parking lorsque :

- le dispositif de frein de parking est serré, et
- lesdits moyens de commande manuels sont non-actionnés ou sont défectueux, et
- lesdits moyens d'émission émettent une commande de desserrage du dispositif de frein de parking, sans avoir émis de commande de desserrage du dispositif de frein de parking dans un délai précédent sensiblement égal audit intervalle de temps prédéterminé.

Ainsi, un desserrage assisté des freins est possible si les freins sont effectivement serrés, si le conducteur n'exprime aucune demande par les moyens de commande manuels ou si les moyens de commande manuels sont défectueux, et si les conditions de démarrage en côte ou de manoeuvre en côte assistées sont réalisées.

Lorsque ces conditions ne sont pas réalisées, la demande de desserrage n'est pas transmise aux actionneurs de frein, et si les moyens d'émission émettent une commande de désactivation du dispositif de frein de parking automatique, les moyens d'interface commandent la désactivation de l'assistance du dispositif de frein de parking.

Dans un mode de réalisation, le système comprend des moyens de commande manuelle, actionnables par le conducteur, pour commander un desserrage du dispositif de frein de parking. Lesdits moyens d'interface sont adaptés pour émettre une commande de desserrage du dispositif de frein de parking lorsque :

- le dispositif de frein de parking est serré ou en cours de serrage, et
- lesdits moyens de commande manuels sont non-actionnés ou sont défectueux, et
- lesdits moyens d'émission émettent une commande de desserrage du dispositif de frein de parking, sans avoir émis de commande de desserrage du dispositif de frein de parking dans un délai précédent sensiblement égal audit intervalle de temps prédéterminé.

Il est ainsi possible d'arrêter un serrage du dispositif de frein de parking et d'effectuer immédiatement un desserrage si une demande de démarrage ou de manoeuvre en côte est effectuée.

Dans un mode de réalisation, lesdits moyens d'interface sont adaptés pour désactiver le dispositif de frein de parking automatique lorsque lesdits moyens d'émission émettent une commande de désactivation du dispositif de frein de parking automatique.

Selon un autre aspect de l'invention, il est également proposé un procédé de commande du desserrage d'un dispositif de frein de parking automatique embarqué à bord du véhicule automobile, dans lequel on modifie une émission multiple d'une commande de desserrage du dispositif de frein de parking en une émission d'une commande de desserrage du dispositif de frein de parking pour des actionneurs de frein inadaptés à ladite émission multiple d'une commande de desserrage.

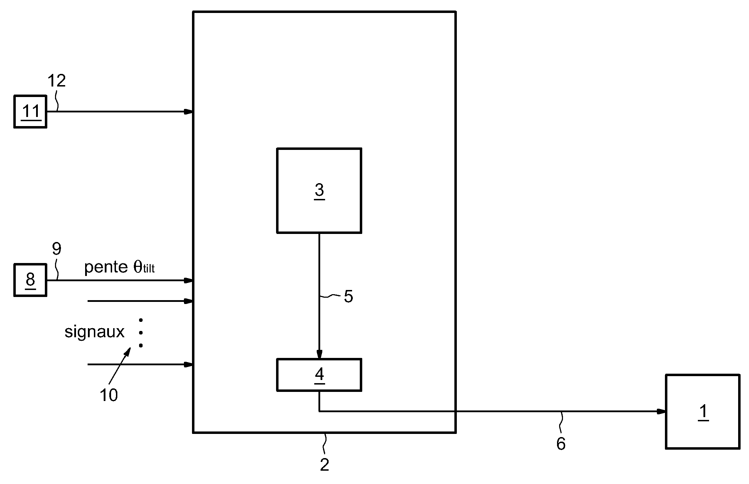

L'invention sera mieux comprise à l'étude de la description détaillée suivante, de quelques modes de réalisation pris à titre d'exemples nullement limitatifs et illustrés par le dessin annexé représentant un système de commande du desserrage d'un dispositif de frein de parking automatique selon un aspect de l'invention.

La figure illustre un exemple de système de commande du desserrage d'un dispositif de frein de parking 1 automatique, embarqué à bord d'un véhicule automobile, permettant d'assister le conducteur lors d'un démarrage en côte ou d'une manoeuvre en côte. Le dispositif de frein de parking 1 est commandé en fonction de différents paramètres par une unité de commande électronique 2.

L'unité de commande électronique 2 est munie d'un module d'émission 3 pour émettre plusieurs fois une commande de desserrage du dispositif de frein de parking 1. L'unité de commande électronique 2 comprend également un module d'interface 4 disposé entre le module d'émission 3 et le dispositif de frein de parking 1. Le module d'interface 4 reçoit les émissions successives d'une commande de desserrage provenant du module d'émission 3 par l'intermédiaire d'une connexion 5. Par exemple, les émissions successives de la commande de desserrage sont espacés d'un intervalle de temps prédéterminé. Le module d'interface 4 transmet une commande de desserrage au dispositif de frein de parking 1 par l'intermédiaire d'une connexion 6. Le module d'interface 4 transmet une commande de desserrage au dispositif de frein de parking 1 pour l'ensemble des émissions successives de la commande de desserrage provenant du module d'émission 3.

Le dispositif de frein de parking automatique 1 est, par exemple, commandé par l'unité de commande électronique 2, de sorte que, lorsque le couple transmis aux roues motrices du véhicule compense les effets induits par la pente, le module d'émission 3 de l'unité de commande électronique 2 commande le desserrage du dispositif de frein de parking automatique 1.

Aussi, l'unité de commande électronique 2 reçoit une information représentative de la pente $\theta_{tilt}$ d'un capteur de pente 8, par l'intermédiaire d'une connexion 9. L'unité de commande électronique 2 reçoit également une pluralité d'autres signaux 10 fournis par divers capteurs ou estimateurs embarqués à bord du véhicule. Ces signaux sont représentatifs de la valeur de divers paramètres de fonctionnement du véhicule, par exemple la position de la pédale d'embrayage, la position de la pédale d'accélérateur, la vitesse longitudinale du véhicule, ou la vitesse de rotation du moteur.

Le système comprend en outre un module de commande manuel 11 relié à l'unité de commande électronique 2 par une connexion 12, et actionnable par le conducteur, pour commander un serrage ou un desserrage du dispositif de frein de parking 1. Le module de commande manuel 11 peut, par exemple, comprendre un bouton poussoir, un élément tactile, ou tout autre élément actionnable manuellement par le conducteur.

Afin d'expliciter divers modes de réalisation du module d'interface 4, on définit les paramètres suivants :

- EPB_status représente l'état du dispositif de frein de parking 1,
- EPB_switch représente l'état du module de commande manuel 11 actionnable par le conducteur,
- TOA_demand représente l'action du module d'émission 3, et
- TOA_demand_ev représente l'action du module d'interface 4.

Les valeurs prédéterminées de ces différents paramètres sont définies comme suit :

$$EPB\_status = \begin{cases} 0 : \text{freins serrés} \\ 1 : \text{freins desserrés} \\ 2 : \text{serrage en cours} \\ 3 : \text{desserrage en cours} \\ 4 : \text{actionneur défectueux} \end{cases}$$

EP 2 183 134 B1

$$EPB\_switch = \begin{cases} 0 : \text{neutre, aucune demande du conducteur} \\ 1 : \text{desserrage des freins demandé par le conducteur} \\ 2 : \text{ serrage des freins demandé par le conducteur} \\ 3 : \text{module de commande manuel défectueux} \end{cases}$$

$$TOA\_demand = \begin{cases} 0 : \text{aucune demande de desserrage suite à une stratégie} \\ \text{d'aide au démarrage ou manoeuvre en côte} \\ 1 : \text{demande multiple de desserrage suite, par exemple,} \\ \text{à une stratégie d'aide au démarrage ou manoeuvre en côte} \\ 2 : \text{stratégie d'aide au démarrage ou manoeuvre en côte} \\ \text{désactivée} \end{cases}$$

$$TOA\_demand\_ev = \begin{cases} 0 : \text{aucune demande de desserrage suite à une stratégie} \\ \text{d'aide au démarrage ou manoeuvre en côte} \\ 1 : \text{demande de desserrage suite à une stratégie d'aide} \\ \text{au démarrage ou manoeuvre en côte} \\ 2 : \text{stratégie d'aide au démarrage ou manoeuvre en côte} \\ \text{ désactivée} \end{cases}$$

En notant k un indice dont l'incrémentation d'une unité représente l'écoulement d'un intervalle de temps prédéterminé séparant deux émissions successives d'une commande de desserrage par le module d'émission 3, on peut illustrer le fonctionnement du module d'interface 4 par :

$$TOA\_demand\_ev(k) = \begin{cases} 1 \text{ si } (EPB\_status == 0) \text{ et} \\ \quad ((EPB\_switch == 0) \text{ ou } (EPB\_switch == 3)) \text{ et} \\ \quad (TOA\_demand(k) == 1) \text{ et } (TOA\_demand(k-1) == 0) \\ 2 \text{ si } TOA\_demand(k) == 2 \\ 0 \text{ autrement} \end{cases}$$

Ainsi, le module d'interface 4 donne la priorité aux demandes effectuées volontairement par le conducteur via le module de commande manuel 11. Une demande de desserrage n'est envoyée au dispositif de frein de parking 1 que lorsque les freins sont réellement serrés, ce qui évite d'essayer de desserrer des freins déjà desserrés ou dont un desserrage est déjà en cours.

Il est également possible, de façon simple et robuste, de retarder intentionnellement une commande de desserrage générée par un dispositif de frein de parking automatique pour une aide au démarrage ou aux manoeuvres en côte. Il est possible d'effectuer un démarrage ou une manoeuvre en côte assistée même en cas de panne ou de défaut de fonctionnement du module de commande manuel 11, évitant ainsi une immobilisation du véhicule.

En variante, il est possible d'illustrer un autre mode de réalisation du module d'interface 4 par :

4

$$TOA\_demand\_ev(k) = \begin{cases} 1 \text{ si } & ((EPB\_status = 0) \text{ ou } (EPB\_status = 2)) \text{ et} \\ & ((EPB\_switch = 0) \text{ ou } (EPB\_switch = 3)) \text{ et} \\ & (TOA\_demand(k) = 1) \text{ et } (TOA\_demand(k-1) == 0) \\ 2 \text{ si } & TOA\_demand(k) = 2 \\ 0 & \text{autrement} \end{cases}$$

Par rapport au mode de réalisation précédent, ce mode de réalisation présente l'avantage d'arrêter un serrage des freins en cours et d'effectuer immédiatement un desserrage des freins lorsqu'une demande de démarrage en côte assisté ou de ou de manoeuvre en côte assistée est généré.

En variante, le module d'interface 4 peut tenir compte de paramètres supplémentaires tels que l'ouverture d'une porte, la présence d'un conducteur, ou la mise de ceinture de sécurité, de manière à augmenter encore la sécurité des occupants du véhicule.

L'invention permet, à faible coût, d'adapter un système de commande du desserrage d'un dispositif de frein de parking automatique équipé d'un module d'émission émettant plusieurs fois une commande de desserrage à un dispositif de frein de parking non prévu pour fonctionner avec une commande de desserrage dupliquée plusieurs fois.

**Revendications**

1. Système de commande du desserrage d'un dispositif de frein de parking automatique (1), embarqué à bord d'un véhicule automobile, comprenant des moyens d'émission (3) adaptés pour émettre un nombre prédéterminé de fois ladite commande de desserrage du dispositif de frein de parking (1) lorsque le couple transmis aux roues motrices du véhicule compense les effets induits par la pente, deux émissions successives étant séparées par un intervalle de temps prédéterminé, **caractérisé en ce qu'**il comprend des moyens d'interface (4), disposés entre lesdits moyens d'émission (3) et ledit dispositif de frein de parking (1), pour recevoir lesdites émissions de la commande de desserrage et transmettre une commande de desserrage dudit dispositif de frein de parking (1) pour l'ensemble des émissions successives de la commande de desserrage provenant des moyens d'émission (3).

2. Système selon la revendication 1, comprenant des moyens de commande manuels (11), actionnables par le conducteur, pour commander un desserrage du dispositif de frein de parking (1), dans lequel lesdits moyens d'interface (4) sont adaptés pour émettre une commande de desserrage du dispositif de frein de parking (1) lorsque :

   - le dispositif de frein de parking (1) est serré, et
   - lesdits moyens de commande manuels (11) sont non-actionnés ou sont défectueux, et
   - lesdits moyens d'émission (3) émettent une commande de desserrage du dispositif de frein de parking (1), sans avoir émis de commande de desserrage du dispositif de frein de parking (1) dans un délai précédent sensiblement égal audit intervalle de temps prédéterminé.

3. Système selon la revendication 1, comprenant des moyens de commande manuels (11), actionnables par le conducteur, pour commander un desserrage du dispositif de frein de parking (1), dans lequel lesdits moyens d'interface (4) sont adaptés pour émettre une commande de desserrage du dispositif de frein de parking (1) lorsque :

   - le dispositif de frein de parking (1) est serré ou en cours de serrage, et
   - lesdits moyens de commande manuels (11) sont non-actionnés ou sont défectueux, et
   - lesdits moyens d'émission (3) émettent une commande de desserrage du dispositif de frein de parking (1), sans avoir émis de commande de desserrage du dispositif de frein de parking (1) dans un délai précédent sensiblement égal audit intervalle de temps prédéterminé.

4. Système selon la revendication 2 ou 3, dans lequel lesdits moyens d'interface (4) sont adaptés pour désactiver le dispositif de frein de parking automatique (1) lorsque lesdits moyens d'émission (3) émettent une commande de désactivation du dispositif de frein de parking automatique (1).

5. Procédé de commande du desserrage d'un dispositif de frein de parking automatique (1) par un système de commande du desserrage d'un dispositif de frein de parking automatique (1) selon l'une des revendications 1 à 4, embarqués à bord d'un véhicule automobile, **caractérisé en ce que** l'on modifie une émission multiple d'une commande de desserrage du dispositif de frein de parking (1) en une émission d'une commande de desserrage du dispositif de frein de parking (1) comprenant des actionneurs inadaptés à ladite émission multiple d'une commande de desserrage en fonction de conditions déterminées.

**Patentansprüche**

1. System zur Steuerung des Lösens einer in einem Fahrzeug befindlichen automatischen Feststellbremsenvorrichtung (1), das Sendemittel (3) umfasst, die geeignet sind, eine vorbestimmte Anzahl von Malen den Befehl zum Lösen der Feststellbremsenvorrichtung (1) zu senden, wenn das auf die Antriebsräder des Fahrzeugs übertragene Drehmoment die durch die Steigung induzierten Auswirkungen kompensiert, wobei zwei aufeinanderfolgende Sendungen durch ein vorherbestimmtes Zeitintervall voneinander getrennt sind, **dadurch gekennzeichnet, dass** es Schnittstellenmittel (4) umfasst, die zwischen den Sendemitteln (3) und der Feststellbremsenvorrichtung (1) angeordnet sind, um für alle von den Sendemitteln (3) stammenden aufeinanderfolgenden Sendungen des Befehls zum Lösen die Sendungen des Befehls zum Lösen zu empfangen und einen Befehl zum Lösen der Feststellbremsenvorrichtung (1) zu übertragen.

2. System nach Anspruch 1, das manuelle Steuermittel (11) umfasst, die durch den Fahrer betätigbar sind, um ein Lösen der Feststellbremsenvorrichtung (1) zu steuern, wobei die Schnittstellenmittel (4) geeignet sind, einen Befehl zum Lösen der Feststellbremsenvorrichtung (1) zu senden, wenn:

   - die Feststellbremsenvorrichtung (1) angezogen ist, und
   - die manuellen Steuermittel (11) nicht betätigt oder defekt sind, und
   - die Sendemittel (3) einen Befehl zum Lösen der Feststellbremsenvorrichtung (1) senden, ohne in einem vorhergehenden Zeitraum, der im Wesentlichen gleich dem vorbestimmten Zeitintervall ist, einen Befehl zum Lösen der Feststellbremsenvorrichtung (1) gesendet zu haben.

3. System nach Anspruch 1, das manuelle Steuermittel (11) umfasst, die durch den Fahrer betätigbar sind, um ein Lösen der Feststellbremsenvorrichtung (1) zu steuern, wobei die Schnittstellenmittel (4) geeignet sind, einen Befehl zum Lösen der Feststellbremsenvorrichtung (1) zu senden, wenn:

   - die Feststellbremsenvorrichtung (1) angezogen ist oder gerade angezogen wird, und
   - die manuellen Steuermittel (11) nicht betätigt oder defekt sind, und
   - die Sendemittel (3) einen Befehl zum Lösen der Feststellbremsenvorrichtung (1) senden, ohne in einem vorhergehenden Zeitraum, der im Wesentlichen gleich dem vorbestimmten Zeitintervall ist, einen Befehl zum Lösen der Feststellbremsenvorrichtung (1) gesendet zu haben.

4. System nach Anspruch 2 oder 3, wobei die Schnittstellenmittel (4) geeignet sind, die automatische Feststellbremsenvorrichtung (1) zu deaktivieren, wenn die Sendemittel (3) einen Befehl zum Deaktivieren der automatischen Feststellbremsenvorrichtung (1) senden.

5. Verfahren zum Steuern des Lösens einer automatischen Feststellbremsenvorrichtung (1) durch ein System zum Steuern des Lösens einer in einem Fahrzeug befindlichen automatischen Feststellbremsenvorrichtung (1) nach einem der Ansprüche 1 bis 4, **dadurch gekennzeichnet, dass** ein mehrfaches Senden eines Befehls zum Lösen der Feststellbremsenvorrichtung (1) in ein Senden eines Befehls zum Lösen der Feststellbremsenvorrichtung (1), die Aktoren umfasst, die ungeeignet zum mehrfachen Senden eines Befehls in Abhängigkeit von festgelegten Bedingungen sind, geändert wird.

**Claims**

1. System for controlling the release of an automatic parking brake device (1), on board an automobile, comprising emission means (3) adapted to emit said command to release the parking brake device (1) a predetermined number of times, when the torque transmitted to the drive wheels of the vehicle compensates the effects induced by the slope, two successive emissions being separated by a predetermined interval, **characterized in that** it comprises interface means (4), positioned between said emission means (3) and said parking brake device (1), to receive said emissions of the release command and transmit a command to release said parking brake device (1) for all the successive emissions of the release command from the emission module (3).

**2.** System according to Claim 1, comprising manual control means (11), which can be actuated by the driver, to command a release of the parking brake device (1), wherein said interface means (4) are adapted to emit a command to release the parking brake device (1) when:

- the parking brake device (1) is clamped, and
- said manual control means (11) are not actuated or are defective, and
- said emission means (3) emit a command to release the parking brake device (1), without having emitted any command to release the parking brake device (1) within a preceding delay that is substantially equal to said predetermined time interval.

**3.** System according to Claim 1, comprising manual control means (11), which can be actuated by the driver, to command a release of the parking brake device (1), wherein said interface means (4) are adapted to emit a command to release the parking brake device (1) when:

- the parking brake device (1) is clamped or being clamped, and
- said manual control means (11) are not actuated or are defective, and
- said emission means (3) emit a command to release the parking brake device (1), without having emitted any command to release the parking brake device (1) within a preceding delay that is substantially equal to said predetermined time interval.

**4.** The system according to Claim 2 or 3, wherein said interface means (4) are adapted to deactivate the automatic parking brake device (1) when said emission means (3) emit a command to deactivate the automatic parking brake device (1).

**5.** Method for controlling the release of an automatic parking brake device (1) by a system for controlling the release of an automatic parking brake device (1) according to one of Claims 1 to 4, on board an automobile, **characterized in that** a multiple emission of a command to release the parking brake device (1) is modified to an emission of a command to release the parking brake device (1) comprising actuators unsuited to said multiple emission of a release command according to determined conditions.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2828450
- GB 2376990 A
- GB 2342967 A